Europäisches Patentamt

(19) European Patent Office

Office européen des brevets

(11) EP 0 517 538 B1

(12) EUROPEAN PATENT SPECIFICATION

(45) Date of publication and mention
of the grant of the patent:
23.04.1997 Bulletin 1997/17

(51) Int. Cl.$^6$: B60C 1/00, C08L 21/00
// (C08L21/00, 9:00)

(21) Application number: 92305174.2

(22) Date of filing: 05.06.1992

(54) **Pneumatic tires**

Luftreifen

Bandage pneumatique

(84) Designated Contracting States:
DE ES FR GB SE

(30) Priority: 07.06.1991 JP 162435/91
21.04.1992 JP 101269/92

(43) Date of publication of application:
09.12.1992 Bulletin 1992/50

(73) Proprietor: BRIDGESTONE CORPORATION
Tokyo 104 (JP)

(72) Inventors:
• Morimoto, Yoshiyuki
Kodaira City, Tokyo (JP)
• Yamauchi, Koji
Kodaira City, Tokyo (JP)
• Iwafune, Seiichiro
Hoya City, Tokyo (JP)
• Hamada, Tatsuro
Kodaira City, Tokyo (JP)
• Aoyama, Masanori
Kodaira City, Tokyo (JP)
• Yamanaka, Eiji
Kodaira City, Tokyo (JP)

(74) Representative: Whalley, Kevin et al
MARKS & CLERK,
57-60 Lincoln's Inn Fields
London WC2A 3LS (GB)

(56) References cited:
EP-A- 0 307 341          DE-A- 3 703 480
US-A- 4 274 462

• WORLD PATENTS INDEX LATEST Week 8819,
Derwent Publications Ltd., London, GB; AN 88-
130660

## Description

The present invention relates to pneumatic tires, more particularly to so-called all season type pneumatic tires which have remarkably improved drivability, brakability and cornering stability on ice and snow roads and which maintain their cornering stability or durability in the summer season.

Recently, demand has increased for so-called all season type tires which can be used even in the winter season, without being exchanged, as in the summer season. Such tires are required to possess substantially the same dry gripping power, wet gripping power, cornering stability, durability and low fuel consumption even in the winter season as well as in the summer season, and also to possess sufficient drivability and brakability even on ice and snow.

A tread rubber used in such tires needs to satisfy requirements for a tread rubber required in the summer season, and also its hardness at low temperatures needs be lowered. In view of this, methods have been formerly known to use a polymer having a low glass transition temperature or to employ a softener or plasticizer capable of appropriately maintaining modulus of elasticity at low temperatures.

However, although the former method exhibits some improvement of tire performances in an ice-snow temperature range due to a hysteresis loss characteristic of such a polymer, brakability or cornering stability is insufficient on wet or dry roads. The latter method is disclosed in Japanese Patent application Laid-open No. 55-135,149, 58-199,203 or 60-137,945, and it is pointed out that any of the techniques of these publications has a problem that, as compared with an improved degree of the performances on ice and snow, wear resistance or durability during running on general roads are more adversely affected.

Although relatively good tire performances on ice and snow are indeed exhibited on so-called dry-on-ice conditions, i.e. a relatively low temperature range of not more than -5°C, in any of the above techniques, a sufficient coefficient of friction cannot be obtained with respect to tire performances on ice and snow in a wet state near 0°C, i.e. in a so-called wet-on-ice conditions. Therefore, it cannot be said that drivability, brakability and cornering stability are fully improved with respect to the wet-on-ice conditions.

US-A-4 274 462 discloses a pneumatic tire having a cap/base structured tread, the base of which is composed of a rubber composition comprising a rubber component and particulates of a crystalline syndiotactic-1,2-polybutadiene resin having an average particle diameter of not more than 1 $\mu$m, and a maximum diameter of not more than 10 $\mu$m, the melting point of said crystalline syndiotactic-1,2-polybutadiene resin being not less than 190 °C, and the compounding ratio of the said resin being 3-40 parts by weight relative to 100 parts by weight of rubber.

It is an aim of the present invention to provide a pneumatic tire which is an all season type pneumatic tire in a strict sense, which can not only fully maintain cornering stability, durability and low fuel consumption in the summer season but also have satisfactory drivability and brakability both in the dry-on-ice conditions and in the wet-on-ice conditions.

The present inventors have strenuously investigated performances of rubbers of treads of the above-mentioned all season or studless tires on ice and snow, particularly on ice and snow roads in a wet state, and have discovered that when a rubber composition including particulates of a syndiotactic-1,2-polybutadiene resin having a specific structure is used as a rubber composition of the tread, tire performances on ice and snow can be remarkably improved, while cornering stability, and durability required in the summer season or in running on ordinary roads are not deteriorated. The present invention has been accomplished based on this discovery.

The present invention in one aspect provides a pneumatic tire having a tread composed of a rubber composition, said rubber composition including a rubber component and particulates of a crystalline syndiotactic-1,2-polybutadiene resin, the particulates having an average particle diameter of 10 to 500 $\mu$m, and the melting point of said crystalline syndiotactic-1,2-polybutadiene resin being not less than 110°C, and the compounding ratio of the said resin being 5 to 60 parts by weight relative to 100 parts by weight of said rubber component, wherein the tread is either entirely composed of the said rubber composition or the tread has a cap-and-base construction and the said rubber composition is used in the cap only.

The rubber component constituting a matrix portion of the tread rubber other than the above particulates is preferably a foamed rubber. In this case, it is confirmed that the tire performances on ice and snow can be further improved.

The present invention in another aspect provides a pneumatic tire having a tread composed of a rubber composition, said rubber composition including a rubber component and resin-composite particulates having an average particle diameter of 10 to 500 $\mu$m and composed of a crystalline syndiotactic-1,2-polybutadiene resin having a melting point of not less than 110°C and a carbon black, the compounding ratio of the resin-composite particulates being 5 to 60 parts by weight relative to 100 parts by weight of the rubber component, and the resin and the carbon black satisfying the following inequalities: $250 < X + 10 Y < 1300$ in which X is nitrogen-adsorption specific surface area (unit: $m^2$/g) and Y is compounding ratio of the carbon black (parts by weight) relative to 100 parts by weight of the resin, wherein the tread is either entirely composed of the said rubber composition or the tread has a cap-and-base construction and the said rubber composition is used in the cap only.

According to this pneumatic tire, the rubber component constituting a matrix portion of the tread rubber composed of the above rubber composition other than the resin-composite particulates is preferably a foamed rubber.

The first aspect of the present invention will be now explained in more detail.

First, the average particle diameter of the particulates of the syndiotactic-1,2-polybutadiene resin used in the present invention needs to be in a range of 10 to 500 $\mu$m. The reason is that if the average particle diameter is less than 10 $\mu$m, tire performances on ice and roads as aimed at by the present invention are not sufficient. On the other hand, if the average particle diameter is more than 500 $\mu$m, although some effects are recognized with respect to the tire performances on ice and snow, it is undesirable because other performances such as wear resistance also required for the tire are deteriorated. The syndiotactic-1,2-polybutadiene resin used in the present invention needs to be in the particulate form. The average ratio M between the major axis and the minor axis of the resin particulates is preferably not more than 6, more preferably not more than 4, in the state that the resin is kneaded into the rubber composition and when the major axis and the minor axis are measured as viewed in a circumferential section or a radial section of the tread. That is, in order to improve drivability or brakability on ice and snow, it is required that the syndiotactic-1,2-polybutadiene resin is dispersed in the rubber composition in the particulate form, not in the form of microorganic pile fibers.

The syndiotactic-1,2-polybutadiene resin usually has crystallinity. In the present invention, the crystalline syndiotactic-1,2-polybutadiene resin has a melting point of not less than 110°C. The reason is that if the melting point is less than 110°C, the resin is softened, deformed or partially or entirely melted when the resin is added and kneaded into the rubber component on compounding. Thus, since the desired average particle diameter cannot be maintained, improved tire performances on ice and snow as aimed at by the present invention are not obtained.

Further, it is necessary that 5 to 60 parts by weight of the above syndiotactic-1,2-polybutadiene resin is incorporated in the rubber composition for the tread of the pneumatic tire of the present invention relative to 100 parts by weight of the rubber component. The reason is that if the compounding ratio is less than 5 parts by weight, improved performances on ice and snow as desired can hardly be attained, whereas if more than 60 parts by weight of the resin is incorporated relative to 100 parts of the rubber component, not only are other tire performances such as wear resistance deteriorated, but also processability during the production of the tire is largely deteriorated, thereby rendering the pneumatic tire actually impractical.

In the present invention, it is unnecessary to limit the kind of the rubber component constituting the rubber composition in which the syndiotactic-1,2-polybutadiene resin is incorporated as well as the kinds of filler and other additives to any specific ones, and ordinary rubber, filler, and additives, may be employed.

For example, as the rubber component, natural rubber, polyisoprene rubber, polybutadiene rubber, styrene-butadiene copolymer rubber, styrene-isoprene-butadiene terpolymer, styrene-isoprene copolymer rubber, and isoprene-butadiene copolymer rubber may be used. The rubber composition used in the tread may include a filler, an antioxidant, a vulcanizing agent, and a vulcanization accelerator. The kinds and the amounts of these additives may be selected among ordinary ranges, and are not limited to any specific ones.

According to the present invention, it is preferable that the tread rubber has closed cells at a foaming rate of 3 to 35 %. Such closed cells are effective in exhibiting excellent performances on ice and snow through increasing microscopic water absorption-drainage effect due to the cells in a state that ice is abundant with water melted on its surface near 0°C. The foaming may be effected either by using a foaming agent by or mixing with a gas under high pressure. If the foaming rate is less than 3%, the foaming effect cannot be sufficiently exhibited. On the other hand, if the foaming rate is more than 35%, the rigidity of the tread becomes insufficient. In this case, wear resistance lowers and occurrence of cracks on bottoms of grooves becomes greater.

The foaming rate Vs of the foamed rubber is expressed by the following formula: $Vs = \{(\rho o - \rho_1)/(\rho_1 - \rho_9) - 1\} \times 100(\%)$ ... (1) in which $\rho_1$ is density of the foamed rubber (g/cm$^3$), $\rho o$ is density of a solid phase of the foamed rubber (g/cm$^3$), and $\rho_9$ is density of a gas phase inside the cells in the foamed rubber (g/cm$^3$). The foamed rubber is constituted by the solid phase, and voids (closed cells) defined by the solid phase, that is a gas phase inside the cells. The density $\rho_9$ of the gas phase is extremely small, i.e. almost near zero, and is very much smaller than the density $\rho_1$ of the solid phase. Therefore, the above formula (1) may be approximated to $Vs = \{(\rho o - \rho_1) - 1\} \times 100(\%)$.

In the pneumatic tire according to the present invention, the ordinary rubber or foamed rubber composition in which the above-mentioned syndiotactic-1,2-polybutadiene resin is incorporated may be arranged in a cap portion of the tread having a cap-and-base construction.

Next, the second aspect of the present invention will be explained in more detail.

As mentioned above, the syndiotactic-1,2-polybutadiene resin also employed in the second aspect of the present invention has crystallinity. The crystalline resin needs to have a melting point of not less than 110°C. The reason is that if the melting point is less than 110°C, the resin is softened, deformed or partially or entirely melted when the resin is added and kneaded into the rubber component on compounding. Thus, since the desired average particle diameter cannot be maintained, improved tire performances on ice and snow as aimed at by the present invention are not obtained.

Further, it is undesirable that (X + 10Y) is smaller than 250, because desired hardness of the resin-composite particulates cannot be obtained, so that intended performances on ice and snow cannot be obtained. On the other hand, it is undesirable that (X + 10Y) is greater than 1300, because processability is conspicuously deteriorated during the production of the resin-composite particulates.

Furthermore, the average particle diameter of the particulates of the syndiotactic-1,2-polybutadiene resin used in the present invention need to be in a range of 10 to 500 $\mu$m. The reason is that if the average particle diameter is less than 10 $\mu$m, tire performances on ice and roads as aimed at by the present invention are not sufficient. On the other hand, if the average particle diameter is more than 500 $\mu$m, although some effects are recognized with respect to the tire performances on ice and snow, it is undesirable because other performances such as wear resistance also required for the tire are deteriorated.

Further, it is necessary that 5 to 60 parts by weight of the composite particulates of the above syndiotactic-1,2-polybutadiene resin is incorporated in the rubber composition for the tread of the pneumatic tire of the present invention relative to 100 parts by weight of the rubber component. The reason is that if the compounding ratio is less than 5 parts by weight, improved performances on ice and snow as desired can hardly be attained, whereas if more than 60 parts by weight of the resin is incorporated relative to 100 parts of the rubber component, not only are other tire performances such as wear resistance deteriorated, but also processability during the production of the tire is largely deteriorated, thereby rendering the pneumatic tire actually impractical.

The composite particulates of the syndiotactic-1,2-polybutadiene resin satisfying the above-mentioned requirements to be used in the present invention can be produced by the following method by way of example.

Dewatered benzene, 760 cc, is charged into a 2-liter autoclave in which air is replaced by nitrogen gas, and 74 g of 1,3-butadiene is dissolved into benzene. To the solution is added 1 m mol cobalt octoate (a benzene solution containing 1 m mol/ml of cobalt octoate), and 1 minute thereafter 2 m mol triethyl aluminium (benzene solution containing 2 m mol/ml triethyl aluminium) is added and stirred. One minute later, acetone is added in an appropriate amount to attain a desired melting point. Further, one minute later, carbon disulfide, 0.6 m mol (benzene solution containing 0.3 m mol/ml) is added into the mixture, which is stirred at 10°C for 60 minutes to effect polymerization of 1,3-butadiene.

2,4-Ditertial-butyl-p-cresol, 0.75 g, is added to the syndiotactic-1,2-polybutadiene resin-produced liquid. Then, the resulting liquid is added into 1,000 ml of methanol, thereby precipitating a syndiotactic-1,2-polybutadiene resin.

The thus obtained syndiotactic-1,2-polybutadiene resin is further washed with methanol, and methanol is filtered off, followed by vacuum drying.

250 ml Given carbon black was added to the thus obtained resin, which is kneaded for three minutes at a temperature higher than the melting point of the resin by using a laboratory plastomill.

Composite particulates of the syndiotactic-1,2-polybutadiene resin having a given average particle diameter are obtained from the thus produced syndiotactic-1,2-polybutadiene resin-composite material by an ordinary method.

The method for producing the resin-composite particulates to be used in the present invention is not limited to the above-mentioned one, and any other appropriate producing method may be employed.

In the second aspect of the present invention, it is unnecessary to limit the kind of the rubber constituting the rubber composition in which the composite particulates of the syndiotactic-1,2-polybutadiene resin are incorporated as well as the kinds of filler and other additives to any specific ones, and ordinarily used rubber, filler, and additives may be employed.

For example, as the rubber component, natural rubber, polyisoprene rubber, polybutadiene rubber, styrene-butadiene copolymer rubber, styrene-isoprene-butadiene terpolymer rubber, styrene-isoprene copolymer rubber, and isoprene-butadiene copolymer rubber may be used. The rubber composition used in the tread may include a filler, an antioxidant, a vulcanizator, a vulcanization accelerator, etc. The kinds and the amounts of these additives may be selected among ordinary ranges, and are not limited to any specific ones.

According to the second aspect of the present invention, it is preferable that the tread rubber has closed cells at a foaming rate of 3 to 35 %. Such closed cells are effective in exhibiting excellent performances on ice and snow through increasing microscopic water absorption-drainage effect due to the cells in a state that ice is abundant with water melted on its surface near 0°C. The foaming may be effected either by using a foaming agent or by mixing with a gas under high pressure. If the foaming rate is less than 3%, the foaming effect cannot be sufficiently exhibited. On the other hand, if the foaming rate is more than 35%, the rigidity of the tread becomes insufficient, so that wear resistance lowers and occurrence of cracks on bottoms of grooves becomes greater.

As mentioned above, the foamed rate of the foamed rubber is expressed by the following formula: $Vs = \{(\rho 0 - \rho_1)/(\rho_1 - \rho_9) - 1\} \times 100$ (%), which may be approximated to $Vs = \{(\rho 0 - \rho_1) - 1\} \times 100 (\%)$. When foamed rubber is employed as the matrix, the resin-composite particulates are dispersed in the foamed rubber.

In the pneumatic tire according to the second aspect of the present invention, the rubber composition including the above-mentioned syndiotactic-1,2-polybutadiene resin and composed of the non-foamed or foamed rubber as the matrix may be arranged in the entirety of the tread rubber or in only a cap portion of the tread having a cap-base construction.

In the following, the present invention will be further described with reference to examples and comparative examples.

First, methods for measuring various physical properties of the examples and comparative examples will be explained.

1. Melting point of crystalline syndiotactic-1,2-polybutadiene resin:

The resin was heated at a heating rate of 10°C/min in a temperature range from 30°C to 250°C, and an endothermic peak was obtained by using a differential thermal analyzer DSC 200 manufactured by SEIKO ELECTRONICS CO., LTD. The melting point of the resin was determined based on the thus obtained endothermic peak.

2. Measurement of nitrogen-adsorption specific surface area of carbon black:

Nitrogen-adsorption specific surface area of carbon black was measured according to ASTM D3037-84.

3. Testing of physical properties of tread rubber:

(1) Measurement of coefficient of friction on ice

The coefficient of friction on ice of the rubber composition, particularly the coefficient of friction on ice near 0°C in a wet state, was measured with use of a dynamic-static friction coefficient meter manufactured by KYOWA KAIMEN KAGAKU, CO., LTD. by contacting a surface of a sample (sample dimensions: 10 mm long, 10 mm wide and 5 mm thick) obtained from a slab sheet produced by ordinary vulcanization with ice having a surface temperature of -0.5°C.

The measuring conditions were a load of 2 $kgf/cm^2$ and 5 $kgf/cm^2$ for a passenger car radial tire (small size tire) and a truck-bus radial tire (large size tire), respectively, a sliding speed of 10 mm/sec, a surrounding temperature of -2°C, and the ice surface state being substantially a mirror.

(2) Tests for performances of small size tires

Each small size tire PSR (165SR13) was prepared, subjected to ordinary running as idling over 50km, and tested to check each test item. Similar small tires were used in the following brakability test, wear resistance test and wet skid resistance test.

a) Brakability on ice:

Four tires to be tested were fitted to a vehicle having a displacement of $1500cm^3(cc)$, and a braked distance was measured on ice at an open temperature of -5°C.

In the following Experiment 1, test results are indicated by index, taking that of Comparative Example 1-1 as control tire as 100.

In the following Experiment 3, test results are indicated by index, taking that of Comparative Example 2-7 as control tire as 100.

The greater the value, the better is the brakability on ice.

b) Wear resistance:

Two tires to be tested were fitted to a driving shaft of a passenger vehicle having a displacement of $1500cm^3(cc)$, and run on a concrete road over a test course at a given speed. Change in depth of a groove was measured. In Experiment 1, test results are indicated by index taking that of Comparative Example 1-1 as control tire as 100. In Experiment 3, test results are indicated by index, taking that of Comparative Example 2-7 as control tire as 100. The greater the value, the better is the wear resistance.

c) Wet skid resistance:

Four tires to be tested were fitted to a vehicle having a displacement of $1500cm^3(cc)$, and rapidly braked from 80 km/h on a wet concrete road having water at a depth of 3 mm, and a distance required until the vehicle stopped after the tires were locked was measured. Skid resistance on wet road (wet skid resistance) of the tested tires was evaluated based on the following equation:

In Experiment 1,

$$\text{Wet skid resistance} = \frac{\text{Stopped distance of Comparative tire 1-1 as control tire}}{\text{Stopped distance of Test tire}} \times 100$$

In Experiment 3,

$$\text{Wet skid resistance} = \frac{\text{Stopped distance of Comparative Example 2-7 as control tire}}{\text{Stopped distance of test tires}} \times 100$$

The greater the value, the better is the wet skid resistance.

(3) Tests for performances of large size tires:

Each large size tire TBR (1000R20) was prepared. Tires were fitted to a driving shaft of a 8-ton 2D type truck under a 100% loaded condition, subjected to ordinary running as idling over 150 km, and tested to check each test item.

a) Brakability on ice:

Four tires to be tested were fitted to all wheels of a 8-ton 2D-type truck under a 100% loaded condition, the tires were subjected to full lock braking from 20 km/h, and a braked distance at which the vehicle was stopped was measured. The temperature of ice was -5°C.

In the following Experiment 2, test results are indicated by index, taking that of Comparative Example 1-7 as control tire as 100.

In the following Experiment 4, a 6-ton 2D-type truck was used instead of the 8-ton 2D-type truck in Experiment 2. Test results are indicated by index, taking that of Comparative Example 2-8 as control tire as 100.

The greater the value, the better is the brakability on ice.

b) Wear resistance:

Tires were fitted to all the wheels of the 8-ton 2D-type truck under 100% loaded conditions, and actually run under ordinary conditions. Change in depth of a groove after 50,000 km running was measured. In Experiment 2, test results are indicated by index taking that of Comparative Example 1-7 as control tire as 100. In Experiment 4, test results are indicated by index, taking that of Comparative Example 2-8 as control tire as 100. The greater the value, the better is the wear resistance.

In the following Table 1, the average particle diameters and the melting points of the crystalline syndiotactic-1,2-polybutadiene resins used in the examples and comparative examples are shown.

The average particle diameter was measured by using an air jet sieve grain size meter, 200LS type manufactured by ALPINE Co., Ltd. 50% Accumulated particle diameter was taken as the average particle diameter.

Table 1

| Kind of resin | A | B | C | D | E | F | G | H |
|---|---|---|---|---|---|---|---|---|
| Average particle diameter (μm) | 2.5 | 18 | 80 | 120 | 310 | 570 | 120 | 120 |
| Melting point of crystalline resin (°C) | 140 | 121 | 194 | 139 | 170 | 137 | 87 | 106 |

Experiments 1 and 2

Each of Tables 2 and 3 shows a compounding recipe of various particulate syndiotactic-1,2-polybutadiene resins shown in Table 1 and rubber matrixes combined (parts by weight) as well as physical properties of vulcanizates of these particulate-containing rubbers and performances of tires in which each of the thus obtained particulate-mixed rubbers was employed in a tread of the tire. More particularly, Table 2 shows results of passenger radial tires (PSR) [Experiment 1], and Table 3 shows those of truck-bus radial tires (TBR) [Experiment 2].

EP 0 517 538 B1

Table 2

| | | | Compar- ative Example 1-1 | Compar- ative Example 1-2 | Example 1-1 | Example 1-2 | Example 1-3 | Example 1-4 | Compar- ative Example 1-3 | Compar- ative Example 1-4 | Compar- ative Example 1-5 | Compar- ative Example 1-6 | Example 1-5 | Example 1-6 |
|---|---|---|---|---|---|---|---|---|---|---|---|---|---|---|
| Compound- ing recipe | natural rubber | | 60 | 60 | 60 | 60 | 60 | 60 | 60 | 60 | 60 | 60 | 60 | 60 |
| | butadiene rubber | | 40 | 40 | 40 | 40 | 40 | 40 | 40 | 40 | 40 | 40 | 40 | 40 |
| | carbon black N220 | | 60 | 60 | 60 | 60 | 60 | 60 | 60 | 60 | 60 | 60 | 60 | 60 |
| | process oil | | 5 | 5 | 5 | 5 | 5 | 5 | 5 | 5 | 5 | 5 | 5 | 5 |
| | stearic acid | | 1.5 | 1.5 | 1.5 | 1.5 | 1.5 | 1.5 | 1.5 | 1.5 | 1.5 | 1.5 | 1.5 | 1.5 |
| | zinc oxide | | 3.0 | 3.0 | 3.0 | 3.0 | 3.0 | 3.0 | 3.0 | 3.0 | 3.0 | 3.0 | 3.0 | 3.0 |
| | antioxidant | | 1.0 | 1.0 | 1.0 | 1.0 | 1.0 | 1.0 | 1.0 | 1.0 | 1.0 | 1.0 | 1.0 | 1.0 |
| | vulcanization accelerator | | 1.5 | 1.5 | 1.5 | 1.5 | 1.5 | 1.5 | 1.5 | 1.5 | 1.5 | 1.5 | 1.5 | 1.5 |
| | sulfur | | 1.8 | 1.8 | 1.8 | 1.8 | 1.8 | 1.8 | 1.8 | 1.8 | 1.8 | 1.8 | 1.8 | 1.8 |
| | foaming agent (ADCA) | | – | – | – | – | – | – | – | – | – | 3.0 | 3.0 | 3.0 |
| | urea | | – | – | – | – | – | – | – | – | – | 2.8 | 2.8 | 2.8 |
| | Kind of resin | A | | 20 | – | – | – | – | – | – | – | – | – | – |
| | | B | – | – | 20 | – | – | – | – | – | – | – | – | – |
| | | C | – | – | – | 20 | – | – | – | – | – | – | – | – |
| | | D | – | – | – | – | 20 | – | – | – | – | – | 10 | 20 |
| | | E | – | – | – | – | – | 20 | – | – | – | – | – | – |
| | | F | – | – | – | – | – | – | 20 | – | – | – | – | – |
| | | G | – | – | – | – | – | – | – | 20 | – | – | – | – |
| | | H | – | – | – | – | – | – | – | – | 20 | – | – | – |
| Foaming rate (%) | | | – | – | – | – | – | – | – | – | – | 17 | 14 | 16 |
| Coefficient of friction on ice ×10⁻³ | | | 6.2 | 19 | 29 | 39 | 45 | 47 | 28 | 16 | 19 | 35 | 46 | 51 |
| Tire perform- ance | wet skid resistance | | 100 | 101 | 103 | 101 | 98 | 97 | 95 | 91 | 88 | 104 | 101 | 98 |
| | brakability on ice | | 100 | 98 | 107 | 109 | 121 | 115 | 102 | 95 | 100 | 112 | 118 | 124 |
| | wear resistance | | 100 | 109 | 106 | 95 | 102 | 99 | 79 | 91 | 89 | 88 | 97 | 95 |

EP 0 517 538 B1

## Table 3

| | | Comparative Example 1-7 | Comparative Example 1-8 | Example 1-7 | Example 1-8 | Example 1-9 | Example 1-10 | Comparative Example 1-9 | Comparative Example 1-10 | Comparative Example 1-11 | Example 1-11 | Comparative Example 1-12 |
|---|---|---|---|---|---|---|---|---|---|---|---|---|
| Compounding recipe | butadiene rubber | - | - | - | - | - | - | - | - | 30 | 30 | 30 |
| | natural rubber | 100 | 100 | 100 | 100 | 100 | 100 | 100 | 100 | 70 | 70 | 70 |
| | carbon black N110 | 45 | 45 | 45 | 45 | 45 | 45 | 45 | 45 | 55 | 55 | 55 |
| | process oil | 10 | 10 | 10 | 10 | 10 | 10 | 10 | 10 | 3 | 3 | 3 |
| | stearic acid | 2 | 2 | 2 | 2 | 2 | 2 | 2 | 2 | 4 | 4 | 4 |
| | zinc oxide | 2.5 | 2.5 | 2.5 | 2.5 | 2.5 | 2.5 | 2.5 | 2.5 | 3 | 3 | 3 |
| | antioxidant | 1 | 1 | 1 | 1 | 1 | 1 | 1 | 1 | 1 | 1 | 1 |
| | vulcanization accelerator | 1 | 1 | 1 | 1 | 1 | 1 | 1 | 1 | 2 | 2 | 2 |
| | sulfur | 1.5 | 1.5 | 1.5 | 1.5 | 1.5 | 1.5 | 1.5 | 1.5 | 1.5 | 1.5 | 1.5 |
| | foaming agent (OBSH) Note 1 | - | - | - | - | - | - | - | - | 4.0 | 4.0 | 4.0 |
| | amount of resin D | - | 3 | 10 | 20 | 30 | 50 | 70 | 100 | 3 | 30 | 70 |
| Foaming rate (%) | | - | - | - | - | - | - | - | - | 14 | 16 | 19 |
| Coefficient of friction on ice $\times 10^{-2}$ | | 23 | 22 | 32 | 48 | 53 | 45 | 37 | 30 | 43 | 50 | 39 |
| Tire performance | brakability on ice | 100 | 97 | 108 | 113 | 119 | 115 | 104 | * | 112 | 122 | * |
| | wear resistance | 100 | 106 | 101 | 102 | 98 | 97 | 86 | * | 93 | 92 | * |

Note 1 : p,p'-oxybis(benzylsulfonylhydrazide)

Table 2 shows test results in the performance-evaluating tests for the passenger car radial tires, and the following is confirmed from this Table 2.

That is, in Examples 1-1 to 1-4, the syndiotactic-1,2-polybutadiene resin B, C, D or E satisfying the requirements of

8

the present invention with respect to the average particle diameter and the melting point of the crystalline resin was incorporated in an amount of 20 parts by weight. In Comparative Examples 1-2 to 1-5, the resin A, F, G or H not satisfying such requirements was incorporated. As compared with Comparative Examples 1-2 to 1-5, it is seen from Table 2 that Examples 1-1 to 1-4 had largely improved brakability on ice, while generally maintaining wet skid resistance or wear resistance. (The results are compared through Comparative Example 1-1 as control tire).

In Examples 1-5 and 1-6, the syndiotactic-1,2-polybutadiene resin D satisfying the above requirements of the present invention was compounded into the tread rubber, and a foamed rubber was used as the matrix rubber. In Examples 1-5 and 1-6, the brakability on ice could be further improved while generally maintaining other tire performances. In Comparative Example 1-6, no such resin was compounded, but a foamed rubber was used alone. In Comparative Example 1-6, the brakability on ice was improved, but the wear resistance was not satisfactory.

Next, Table 3 shows test results in the performance-evaluating tests for the truck-bus radial tires, and the following is confirmed from this Table 3.

In Examples 1-7 to 1-10, the syndiotactic-1,2-polybutadiene resin D satisfying the requirements of the present invention was incorporated into a tread rubber in a compounding recipe specified in the present invention. In Comparative Examples 1-8 to 1-10, the compounding ratio of the resin D fell outside the range in the present invention. As compared with Comparative Examples 1-8 to 1-10, the brakability on ice was largely improved in Examples 1-7 to 1-10, while wear resistance is generally maintained. (The results are compared through Comparative Example 1-7 as control tire).

In Example 1-11, the syndiotactic-1,2-polybutadiene resin D satisfying the requirements of the present invention was incorporated into a tread rubber in a compounding recipe specified in the invention, and a foamed rubber was used as the matrix rubber. In Example 1-11, brakability on ice could be further improved, while generally maintaining other tire performances. In Comparative Examples 1-11 and 1-12, the resin was incorporated in an amount falling outside the compounding recipe specified in the present invention, although a foamed rubber was used. In Comparative Examples 1-11 and 1-12, brakability on ice was improved, but satisfactory wear resistance could not be obtained.

As mentioned above, according to the first aspect of the present invention, since the rubber composition in which the particulates having the specific structure are incorporated in a given amount is used as the rubber composition for the tread, satisfactory drivability and brakability are remarkably improved in dry-on-ice conditions as well as in wet-on-ice conditions, while cornering stability, durability and low fuel consumption required in the summer season or during running on ordinary roads are generally maintained. Therefore, the pneumatic tire according to the present invention can be called the all-season tire in a real sense.

In the following, the second aspect of the present invention, will be explained with reference to specific examples.

Experiment 3

The compounding recipe and test results of tread rubbers will be shown in Tables 4 (Examples 2-1 through 2-10) and Table 5 (Comparative Examples 2-1 through 2-8). This Experiment 3 relates to the tests for performances of the above-mentioned small size tires.

In Examples 2-1 through 2-8 of Experiment 3, the matrix other than the particulates was a non-foamed rubber, and a foamed rubber was used in Examples 2-9 and 2-10.

Kinds and physical properties of the resin-composite particulates in Tables 4 and 5 are shown in Table 6.

The resin-composite particulates A through H fall within the scope of the present invention, and the resin-composite particulates I through M fall outside the scope of the invention.

Table 4

| | | Example | | | | | | | | | |
|---|---|---|---|---|---|---|---|---|---|---|---|
| | | 2-1 | 2-2 | 2-3 | 2-4 | 2-5 | 2-6 | 2-7 | 2-8 | 2-9 | 2-10 |
| Compounding recipe | natural rubber | 60 | 60 | 60 | 60 | 60 | 60 | 60 | 60 | 60 | 60 |
| | butadiene rubber | 40 | 40 | 40 | 40 | 40 | 40 | 40 | 40 | 40 | 40 |
| | carbon black N220 | 60 | 60 | 60 | 60 | 60 | 60 | 60 | 60 | 60 | 60 |
| | process oil | 5 | 5 | 5 | 5 | 5 | 5 | 5 | 5 | 5 | 5 |
| | stearic acid | 1.5 | 1.5 | 1.5 | 1.5 | 1.5 | 1.5 | 1.5 | 1.5 | 1.5 | 1.5 |
| | zinc oxide | 3.0 | 3.0 | 3.0 | 3.0 | 3.0 | 3.0 | 3.0 | 3.0 | 3.0 | 3.0 |
| | antioxidant | 1.0 | 1.0 | 1.0 | 1.0 | 1.0 | 1.0 | 1.0 | 1.0 | 1.0 | 1.0 |
| | vulcanization accelerator | 1.5 | 1.5 | 1.5 | 1.5 | 1.5 | 1.5 | 1.5 | 1.5 | 1.5 | 1.5 |
| | sulfur | 1.8 | 1.8 | 1.8 | 1.8 | 1.8 | 1.8 | 1.8 | 1.8 | 1.8 | 1.8 |
| | foaming agent (ADCA) | - | - | - | - | - | - | - | - | 3.0 | 3.0 |
| | urea | - | - | - | - | - | - | - | - | 2.8 | 2.8 |
| | resin-com-posite par-ticulates — kind | A | B | C | D | E | F | G | H | B | B |
| | resin-com-posite par-ticulates — amount | 20 | 20 | 20 | 20 | 20 | 20 | 20 | 20 | 20 | 10 |
| physical property of tread rubber | foaming rate (%) | - | - | - | - | - | - | - | - | 19 | 18 |
| | coefficient of friction on ice $\times 10^{-2}$ | 5.3 | 5.7 | 5.8 | 6.0 | 5.1 | 5.9 | 6.1 | 5.0 | 6.4 | 6.1 |
| Tire performance | wet skid resistance | 103 | 102 | 100 | 100 | 103 | 101 | 101 | 100 | 104 | 103 |
| | brakability on ice | 129 | 134 | 135 | 136 | 127 | 135 | 138 | 127 | 143 | 139 |
| | wear resistance | 101 | 100 | 99 | 99 | 101 | 100 | 99 | 100 | 97 | 99 |

Table 5

| | | | Comparative Example | | | | | | |
|---|---|---|---|---|---|---|---|---|---|
| | | | 2-1 | 2-2 | 2-3 | 2-4 | 2-5 | 2-6 | 2-7 |
| Compounding recipe | natural rubber | | 60 | 60 | 60 | 60 | 60 | 60 | 60 |
| | butadiene rubber | | 40 | 40 | 40 | 40 | 40 | 40 | 40 |
| | carbon black N220 | | 60 | 60 | 60 | 60 | 60 | 60 | 60 |
| | process oil | | 5 | 5 | 5 | 5 | 5 | 5 | 5 |
| | stearic acid | | 1.5 | 1.5 | 1.5 | 1.5 | 1.5 | 1.5 | 1.5 |
| | zinc oxide | | 3.0 | 3.0 | 3.0 | 3.0 | 3.0 | 3.0 | 3.0 |
| | antioxidant | | 1.0 | 1.0 | 1.0 | 1.0 | 1.0 | 1.0 | 1.0 |
| | vulcanization accelerator | | 1.5 | 1.5 | 1.5 | 1.5 | 1.5 | 1.5 | 1.5 |
| | sulfur | | 1.8 | 1.8 | 1.8 | 1.8 | 1.8 | 1.8 | 1.8 |
| | foaming agent (ADCA) | | - | - | - | - | - | - | - |
| | urea | | - | - | - | - | - | - | - |
| | resin-composite | kind | I | J | K | L | M | B | - |
| | particulates | amount | 20 | 20 | 20 | 20 | 20 | 3 | - |
| physical property of tread rubber | foaming rate (%) | | - | - | - | - | - | - | - |
| | coefficient of friction on ice $\times 10^{-2}$ | | 4.4 | 4.5 | 4.3 | 3.2 | 4.5 | 2.1 | 2.1 |
| Tire performance | wet skid performance | | 99 | 98 | 98 | 99 | 98 | 101 | 100 |
| | brakability on ice | | 121 | 120 | 119 | 108 | 121 | 100 | 100 |
| | wear resistance | | 101 | 99 | 100 | 100 | 102 | 101 | 100 |

Table 6

| | A | B | C | D | E | F | G | H | I | J | K | L | M |
|---|---|---|---|---|---|---|---|---|---|---|---|---|---|
| Kind of resin-composite particulates | A | B | C | D | E | F | G | H | I | J | K | L | M |
| Average particle diameter of resin-composite particulates ($\mu$m) | 120 | 120 | 120 | 120 | 120 | 120 | 310 | 18 | 120 | 120 | 2.5 | 120 | 120 |
| Melting point of crystalline resin (°C) | 140 | 140 | 140 | 140 | 140 | 140 | 170 | 140 | 140 | 140 | 140 | 87 | 140 |
| Master batch of carbon black — $N_2$ specific surface area × $m^2/g$ | 83 | 114 | 143 | 197 | 114 | 114 | 114 | 114 | 42 | 114 | 114 | 114 | 82 |
| Master batch of carbon black — Y weight parts (PHR) | 50 | 50 | 50 | 50 | 20 | 70 | 50 | 50 | 20 | 10 | 50 | 50 | 16 |
| X + 10Y | 583 | 614 | 643 | 697 | 314 | 814 | 614 | 614 | 242 | 214 | 614 | 614 | 242 |

As mentioned above, in Examples 2-1 through 2-10, the coefficient of friction on ice of the tread rubber could be made far greater as compared with the comparative examples, while wear resistance or wet skid resistance was not deteriorated. Thus, it is seen that when such a rubber composition is used in the pneumatic tire, brakability on ice can be largely improved.

Particularly, it is seen that in Examples 2-9 and 2-10 using the foamed rubber as the matrix of the tread rubber, brakability on ice and wet roads could be remarkably improved.

On the contrary, in Comparative Examples 2-1 through 2-6, the resin-composite particles I to M were incorporated, and in Comparative Example 2-7, the compounding ratio of the particulates fell outside the scope of the present invention. In these Comparative Examples 2-1 through 2-6 and 2-7, brakability on ice and wet roads was at low levels.

Experiment 4:

Table 7 shows the compounding recipe and test results of tread rubbers (Examples 2-11 through 2-13 and Comparative Examples 2-8 through 2-11). Experiment 4 relates to test results of performances of the above-mentioned large size tires.

In Examples 2-11 and 2-12 of Experiment 4, the matrix other than the particulates was a non-foamed rubber, and in Example 2-13 the matrix was a foamed rubber.

The kinds of the resin-composite particulates are shown in Table 6.

EP 0 517 538 B1

Table 7

| Compounding recipe | | Example | | | Comparative Example | | | |
|---|---|---|---|---|---|---|---|---|
| | | 2-11 | 2-12 | 2-13 | 2-8 | 2-9 | 2-10 | 2-11 |
| natural rubber | | 100 | 100 | 100 | 100 | 100 | 100 | 100 |
| carbon black N110 | | 45 | 45 | 45 | 45 | 45 | 45 | 45 |
| process oil | | 10 | 10 | 10 | 10 | 10 | 10 | 10 |
| stearic acid | | 2 | 2 | 2 | 2 | 2 | 2 | 2 |
| zinc oxide | | 2.5 | 2.5 | 2.5 | 2.5 | 2.5 | 2.5 | 2.5 |
| antioxidant | | 1 | 1 | 1 | 1 | 1 | 1 | 1 |
| vulcanization accelerator | | 1 | 1 | 1 | 1 | 1 | 1 | 1 |
| sulfur | | 1.5 | 1.5 | 1.5 | 1.5 | 1.5 | 1.5 | 1.5 |
| foaming agent (OBSH) | | – | – | 4.0 (foaming rate 19%) | – | – | – | – |
| resin-composite particulates | kind | B | F | B | – | J | I | M |
| | amount | 20 | 20 | 15 | – | 20 | 20 | 20 |
| Physical property of tread rubber | coefficient of friction on ice ×10⁻² | 6.0 | 5.9 | 6.3 | 2.3 | 5.3 | 4.8 | 4.8 |
| Tire performance | brakability on ice | 127 | 130 | 137 | 100 | 115 | 113 | 111 |
| | wear resistance | 101 | 99 | 96 | 100 | 97 | 96 | 99 |

As shown above, in Examples 2-11 through 2-13, the coefficient of friction on ice of the tread rubber was far increased as compared with Comparative Examples, while wear resistance was not deteriorated. Thus, for the rubber composition in any one of Examples 2-11 through 2-13, brakability on ice can be remarkably improved.

In particular, it is seen that in Example 2-13 using the foamed rubber in the matrix of the tread rubber, brakability

14

on ice has been greatly improved.

On the contrary, for Comparative Example 2-8 containing no resin particulates and Comparative Examples 2-9 and 2-11 containing the particulates falling outside the scope of the present invention, brakability on ice was at low levels.

As mentioned above, since the pneumatic tire of the present invention uses, as the tread rubber, the rubber composition in which a given amount of resin-composite particulates composed of the syndiotactic-1,2-polybutadiene resin and the carbon black are used and optionally further the matrix of the rubber composition other than the particulates is made of the foamed rubber, the present invention can provide remarkably improved so-called all season tires and the studless tires having drivability and brakability on dry-on-ice roads as well as on wet-on-ice roads, while neither cornering stability nor wear resistance in the summer season are deteriorated.

## Claims

1. A pneumatic tire having a tread composed of a rubber composition, said rubber composition including a rubber component and particulates of a crystalline syndiotactic-1,2-polybutadiene resin, the particulates having an average particle diameter of 10 to 500 $\mu$m, and the melting point of said crystalline syndiotactic-1,2-polybutadiene resin being not less than 110°C, and the compounding ratio of the said resin being 5 to 60 parts by weight relative to 100 parts by weight of said rubber component, wherein the tread is either entirely composed of the said rubber composition or the tread has a cap-and-base construction and the said rubber composition is used in the cap only.

2. A pneumatic tire as claimed in claim 1, characterized in that a matrix portion of the rubber composition of the tread rubber is a foamed rubber.

3. A pneumatic tire having a tread composed of a rubber composition, said rubber composition including a rubber component and resin-composite particulates having an average particle diameter of 10 to 500 $\mu$m and composed of a crystalline syndiotactic-1,2-polybutadiene resin having a melting point of not less than 110°C and a carbon black, the compounding ratio of the resin-composite particulates being 5 to 60 parts by weight relative to 100 parts by weight of the rubber component, and the resin and the carbon black satisfying the following inequalities: $250 < X + 10\,Y < 1300$ in which X is nitrogen-adsorption specific surface area (unit: $m^2$/g) and Y is compounding ratio of the carbon black (parts by weight) relative to 100 parts by weight of the resin, wherein the tread is either entirely composed of the said rubber composition or the tread has a cap-and-base construction and the said rubber composition is used in the cap only.

4. A pneumatic tire as claimed in claim 3, characterized in that the rubber component constituting a matrix portion of the rubber composition of the tread rubber other than the said particulates is a foamed rubber.

5. A pneumatic tire as claimed in any of claims 1 to 4, characterized in that a foaming rate of the tread rubber is 3 to 35%.

6. A pneumatic tire as claimed in any of claims 1 to 5, characterized in that an average ratio between a major axis and a minor axis of the resin particulates is not more than 6.

7. A pneumatic tire as claimed in any of claims 1 to 6, characterized in that the rubber component is selected from natural rubber, polyisoprene rubber, polybutadiene rubber, styrene-butadiene copolymer rubber, styrene-isoprene-butadiene terpolymer, styrene-isoprene copolymer rubber, and isoprene-butadiene copolymer rubber.

## Patentansprüche

1. Luftreifen mit einer Lauffläche, die aus einer Kautschukzusammensetzung besteht, wobei die Kautschukzusammensetzung eine Kautschukkomponente und Feststoffteilchen aus einem kristallinen syndiotaktischen 1,2-Polybutadienharz enthält, wobei die Feststoffteilchen einen mittleren Teilchendurchmesser von 10 bis 500 $\mu$m haben und der Schmelzpunkt des kristallinen syndiotaktischen 1,2-Polybutadienharzes mindestens 110°C beträgt, und wobei das Mischungsverhältnis des Harzes 5 bis 60 Gewichtsteile zu 100 Gewichtsteilen der Kautschukkomponente beträgt, wobei die Lauffläche entweder ganz aus der Kautschukzusammensetzung besteht oder in Grund- und Deckschicht-Konstruktion aufgebaut ist und die Kautschukzusammensetzung nur in der Deckschicht verwendet wird.

2. Luftreifen nach Anspruch 1, dadurch gekennzeichnet, daß ein Matrixteil der Kautschukzusammensetzung des Laufflächengummis ein Moosgummi bzw. Schaumgummi ist.

3. Luftreifen mit einer Lauffläche, die aus einer Kautschukzusammensetzung besteht, wobei die Kautschukzusammensetzung eine Kautschukkomponente und Harz-Kompositfeststoffteilchen mit einem mittleren Teilchendurchmesser von 10 bis 500 μm enthält, die aus einem kristallinen syndiotaktischen 1, 2-Polybutadienharz mit einem Schmelzpunkt von mindestens 110°C und aus einem Ruß bestehen, wobei das Mischungsverhältnis der Harz-Kompositfeststoffteilchen 5 bis 60 Gewichtsteile zu 100 Gewichtsteilen der Kautschukkomponente beträgt und das Harz und der Ruß die folgenden Ungleichungen erfüllen: $250 < X + 10Y < 1300$, wobei X die spezifische Adsorptionsfläche für Stickstoff (Einheit: $m^2/g$) und Y das Mischungsverhältnis von Ruß (Gewichtsteile) zu 100 Gewichtsteilen Harz ist, wobei die Lauffläche entweder ganz aus der Kautschukzusammensetzung besteht oder in Grund- und Deckschicht-Konstruktion aufgebaut ist und die Kautschukzusammensetzung nur in der Deckschicht verwendet wird.

4. Luftreifen nach Anspruch 3, dadurch gekennzeichnet, daß die Kautschukkomponente, die einen anderen Matrixteil der Kautschukzusammensetzung der Lauffläche als die Feststoffteilchen bildet, ein Moosgummi bzw. Schaumgummi ist.

5. Luftreifen nach einem der Ansprüche 1 bis 4, dadurch gekennzeichnet, daß eine Schaumbildungsrate des Laufflächengummis 3 bis 35% beträgt.

6. Luftreifen nach einem der Ansprüche 1 bis 5, dadurch gekennzeichnet, daß das mittlere Verhältnis zwischen einer großen und einer kleinen Achse der Harzfeststoffteilchen nicht größer als 6 ist.

7. Luftreifen nach einem der Ansprüche 1 bis 6, dadurch gekennzeichnet, daß die Kautschukkomponente unter Naturkautschuk, Polyisoprenkautschuk, Polybutadienkautschuk, Styrol-Butadien-Copolymer-Kautschuk, Styrol-Isopren-Butadien-Terpolymer, Styrol-Isopren-Copolymer-Kautschuk und Isopren-Butadien-Copolymer-Kautschuk ausgewählt wird.

## Revendications

1. Bandage pneumatique comportant une bande de roulement composée d'une composition de caoutchouc, ladite composition de caoutchouc englobant une composante de caoutchouc et des matières particulaires d'une résine cristalline syndiotactique-1,2-polybutadiène, les matières particulaires ayant un diamètre moyen des particules compris entre 10 à 500 μm et le point de fusion de ladite résine cristalline syndiotactique-1,2-polybutadiène n'étant pas inférieur à 110°C, le rapport de mélange de ladite résine comportant de 5 à 60 parties en poids pour 100 parties en poids dudit composant de caoutchouc, la bande de roulement étant ou bien entièrement composée de ladite composition de caoutchouc ou bien la bande de roulement ayant une construction à chape et à base, ladite composition de caoutchouc étant uniquement utilisée dans la chape.

2. Bandage pneumatique selon la revendication 1, caractérisé en ce qu'une partie de matrice de la composition de caoutchouc de la gomme de bande de roulement est composée de caoutchouc mousse.

3. Bandage pneumatique comportant une bande de roulement composée d'une composition de caoutchouc, ladite composition de caoutchouc englobant une composante de caoutchouc et des matières particulaires composites de résine ayant un diamètre moyen des particules compris entre 10 et 500 μm et composées d'une résine cristalline syndiotactique-1,2-polybutadiène, ayant un point de fusion non inférieur à 110°C, et du noir de carbone, le rapport de mélange des matières particulaires composites de résine étant de 5 à 60 parties en poids pour 100 parties en poids de la composante de caoutchouc, la résine et le noir de carbone satisfaisant aux inégalités ci-dessous: $250 < X + 10 Y < 1300$, où X est une aire de surface spécifique à absorption d'azote (unité $m^2/g$), Y étant le rapport de mélange du noir de carbone (parties en poids) pour 100 parties en poids de la résine, la bande de roulement étant ou bien entièrement composée de ladite composition de caoutchouc ou bien la bande de roulement ayant une construction à chape et à base et ladite composition de caoutchouc étant uniquement utilisée dans la chape.

4. Bandage pneumatique selon la revendication 3, caractérisé en ce que la composante de caoutchouc constituant une partie de matrice de ladite composition de caoutchouc de la gomme de bande de roulement autre que lesdites matières particulaires est un caoutchouc mousse.

5. Bandage pneumatique selon l'une quelconque des revendications 1 à 4, caractérisé en ce qu'un taux de moussage de la gomme de bande de roulement est compris entre 3 et 35%.

6. Bandage pneumatique selon l'une quelconque des revendications 1 à 5, caractérisé en ce qu'un rapport moyen entre un grand axe et un second axe des matières particulaires de résine n'est pas supérieur à 6.

7. Bandage pneumatique selon l'une quelconque des revendications 1 à 6, caractérisé en ce la composante de caoutchouc est choisie dans le groupe constitué de caoutchouc naturel, de caoutchouc polyisoprène, de caoutchouc polybutadiène, de caoutchouc de copolymère styrène-butadiène, de caoutchouc de terpolymère styrène-isoprène-butadiène, de caoutchouc de copolymère styrène-isoprène et de caoutchouc de copolymère isoprène-butadiène.